Europäisches Patentamt

European Patent Office

Office européen des brevets

(19)

(11) Publication number: **0 097 305**
**B1**

(12) **EUROPEAN PATENT SPECIFICATION**

(45) Date of publication of patent specification: **19.02.86**

(51) Int. Cl.⁴: **C 01 B 15/037, C 09 K 15/32**

(21) Application number: **83105793.0**

(22) Date of filing: **13.06.83**

(54) Stabilization of high purity hydrogen peroxide.

(30) Priority: **14.06.82 US 388309**
**29.04.83 US 490000**

(43) Date of publication of application:
**04.01.84 Bulletin 84/01**

(45) Publication of the grant of the patent:
**19.02.86 Bulletin 86/08**

(84) Designated Contracting States:
**BE DE FR GB IT NL**

(56) References cited:
**GB-A-1 353 625**
**US-A-3 234 140**
**US-A-3 383 174**
**US-A-3 387 939**
**US-A-3 681 022**
**US-A-3 701 825**
**US-A-3 781 409**
**US-A-4 061 721**
**US-A-4 362 706**

(73) Proprietor: **FMC Corporation**
**2000 Market Street**
**Philadelphia Pennsylvania 19103 (US)**

(72) Inventor: **Radimer, Kenneth John**
**12 Martin Place**
**Little Falls New Jersey 07424 (US)**

(74) Representative: **Barz, Peter, Dr. et al**
**Patentanwälte Dr. V. Schmied-Kowarzik Dipl.-**
**Ing. G. Dannenberg Dr. P. Weinhold Dr. D. Gudel**
**Dipl.-Ing. S. Schubert Dr. P. Barz**
**Siegfriedstrasse 8**
**D-8000 München 40 (DE)**

Courier Press, Leamington Spa, England.

## Description

This invention relates to stabilizer systems for high purity hydrogen peroxide containing between 25 percent to 35 percent hydrogen peroxide.

Although hydrogen peroxide is unstable thermodynamically, it is not subject to natural autodecomposition processes when pure. Hydrogen peroxide, however, is subject to decomposition by heterogeneous or homogenous catalysts. The stabilizer system selected for hydrogen peroxide depends on the quantity and nature of the decomposition catalyst with which the hydrogen peroxide is expected to be contacted. For example, very pure, concentrated hydrogen peroxide being stored by the manufacturer in large tanks needs very little stabilizer; while even dilute hydrogen peroxide or hydrogen peroxide subject to contamination by uncertain catalysts requires higher concentrations of stabilizers.

Very stringent specifications must be met by high purity hydrogen peroxide to be acceptable to the semiconductor industry or for use as a reagent chemical; the hydrogen peroxide must be stable so that it will not decompose if contaminated with common decomposition catalysts, yet must contain the minimum additives possible to meet these special needs.

The majority of hydrogen peroxide stabilization studies have been directed towards the stabilization of the hydrogen peroxide in concentrated solution in aluminum containers where the highly concentrated hydrogen peroxide has been diluted with either ordinary tap water or distilled water containing possible contaminants, such as iron and copper. Examples of such commercial formulations include U.S. Patent No. 3 387 939; U.S. Patent No. 3,781,409; U.S. Patent No. 3,681,022; U.S. Patent No. 3,383,174; U.S. Patent No. 3,701,825; and U.S. Patent No. 4,061,721. These formulations are typical of hydrogen peroxide shipped in commerce and include those stabilized with organic compounds, such as organic phosphonic acids which are well known in the art as stabilizers for hydrogen peroxide either with or without added tin compounds. The combined effect of mixing two different stabilizer systems is rarely additive; the result may exceed the sum of the effects of the individual stabilizer components or the stabilizers may cancel each other and may result in little or no stabilization effect whatsoever.

The stabilization of hydrogen peroxide has been reviewed through 1955 by Schumb et al, in *Hydrogen Peroxide*, American Chemical Society Monograph Series. New York: Reinhold Publishing Corporation (1955) pages 534 to 539; and more recently, through 1981 by Kirk-Othmer's *Encyclopedia of Chemical Technology*, Volume 13, 3rd Edition. New York: John Wiley & Sons (1981) pages 14 and 15. Sodium stannate has long been known as an effective stabilizer for hydrogen peroxide and Schumb et al review its application in detail. The optimum stannic oxide ($SnO_2$) concentration for 85 percent hydrogen peroxide is reported by Schumb et al to be 0.83 mg/l for 0.1 mg/l ferric iron. It is well known that the quantity of stabilizer required decreases with increasing concentration of the hydrogen peroxide. Therefore, the more dilute grades of hydrogen peroxide require a higher tin content than that reported by Schumb et al for 85 percent hydrogen peroxide.

U.S. Patent No. 3 387 939 teaches that 100—1000 mg/l alkylidene diphosphonic acid together with 50—500 mg/l sodium stannate is effective to stabilize 50—70% hydrogen peroxide solutions. The stabilizing effect is maintained after 10—30 fold dilution with tap (hard) water.

In U.S. Patent No. 3,234,140, Irani discloses amino tri(methylphosphonic acid) as a stabilizer for hydrogen peroxide solutions when the stabilization agent is present in concentrations from about 0.001 to about 5 percent, with from 0.1 percent to 1 percent being the preferred stabilizer range. In U.S. Patent No. 3,383,174, Carnine et al disclose a synergistic combination of amino *tris*(methylenephosphonic acid), also called nitrilo trimethylene phosphonic acid, with sodium stannate. The optimum ranges of the stabilizers are 50 mg/l to 300 mg/l amino *tris*(methylenephosphonic acid) and 10 mg/l to 150 mg/l of the tin compound. Kibbel et al, in U.S. Patent No. 3,681,022, disclose 35 percent hydrogen peroxide formulations containing 300 mg/l of tin in the form of a soluble alkali metal salt, such as sodium stannate and 1250 mg/l amino *tris*(methylenephosphonic acid); the Kibbel et al teaching confirms the prior art that increased stabilizer concentrations are required for lower hydrogen peroxide concentrations. Radimer et al, in U.S. Patent No. 3,701,825 teach that ethylene diamine *tetra*(methylenephosphonic acid) is effective to stabilize hydrogen peroxide.

For many applications, such as reagent chemicals and semiconductor uses, such high concentrations of stabilizer are unacceptable. The present invention is particularly applicable to hydrogen peroxide having a maximum residue after evaporation of 20 milligrams per litre, and especially applies to aqueous solutions containing 25 percent to 35 percent hydrogen peroxide by weight. For example, the specifications for reagent hydrogen peroxide call for a maximum residue after evaporation of 20 mg/l for hydrogen peroxide which assays between 29.0 and 32.0 percent. It is well known that the tin compounds used to stabilize hydrogen peroxide are in the form of colloidal particles which can be coagulated and neutralized by positive ions, such as common decomposition catalysts. The addition of negative ions, such as pyrophosphates, phosphates, and sulfates is known to improve the stability of colloidal stannic oxide. However, effective quantities of these materials cannot be used to reagent hydrogen peroxide chemical formulations in that a maximum of 2 mg/l phosphate and 5 mg/l of sulfate is specified. It is obviously necessary for the stabilizer content of hydrogen peroxide for such uses to be reduced *far below* the optimum values taught by the prior art. Further, it is more common practice for many users of hydrogen

2

peroxide to filter it through 8 μm or finer filters. Such filtration reduces the particulate matter in the solution and also reduces the tin oxides present in colloidal form in the solution.

These tin oxides are necessary to prevent the hydrogen peroxide from decomposing if subsequently it is contaminated with heavy metals. The problem is, therefore, maintaining the necessary tin oxide colloid as very fine particles which are not removed by settling or filtration.

According to the present invention, an aqueous hydrogen peroxide solution can be prepared with a maximum residue after evaporation of 20 milligrams per litre stabilized against decomposition by contaminants, said aqueous solution comprising 25 percent to 35 percent hydrogen peroxide by weight, 0.2 to 3.0 milligrams per litre of sodium stannate trihydrate and 0.1 to 2.5 milligrams per litre of organic phosphonic acid.

It was unexpectedly found that these vary low concentrations of organic phosphonic acids are effective to peptize colloidal tin oxide; these concentrations are *far less* than the concentration taught by the prior art as the minimum concentration required for the organic phosphonic acid to stabilize hydrogen peroxide. Further, it has unexpectedly been found that the tin oxide peptized or dispersed by the organic phosphonic acid is not removed by a filter with openings as fine as 0.22 μm, and remains effective as a stabilizing agent, even in the presence of heavy metal impurities; or after extended storage.

It is critical that the hydrogen peroxide used to prepare this formulation be as pure as possible and the water used for adjusting the hydrogen peroxide concentrations also be of the highest purity, such as demineralized water (deionized water) or multiply-distilled water. It is convenient to prepare the stabilized hydrogen peroxide formulation by means of an intermediate stock solution. It is preferable if this stock stabilizer solution contains approximately 30 percent to 50 percent hydrogen peroxide. To prepare 150 litres of one such stock solution, it is convenient to add 18.75 kilograms of sodium stannate trihydrate to about 130 litres of hydrogen peroxide solution. The mixture is stirred without heating until all of the sodium stannate is dissolved; 11.0 kilograms of amino *tris*(methylenephosphonic acid) is then added and the mixture is stirred and diluted to 150 litres. This solution should have a pH of about 4.25. If necessary, additional amino *tris*(methylenephosphonic acid) can be added to reduce the pH.

Sufficient stock solution is then added to the hydrogen peroxide solution so that when diluted to 29 percent to 32 percent hydrogen peroxide that the solution contains about 0.2 to 3.0 milligrams per litre sodium stannate trihydrate and 0.1 to 2.5 milligrams per litre of an organic phosphonic acid. Preferably, the solution contains 2.5 milligrams per litre sodium stannate trihydrate and 1.5 milligrams per litre of an organic phosphonic acid. The preferred organic phosphonic acids are either amino *tris*(methylenephosphonic acid), 1 - hydroxyethylidene - 1,1 - diphosphonic acid, or ethylenediamine *tetra*(methylenephosphonic acid).

Optionally, it is beneficial if the final hydrogen peroxide solution contains 0.2 to 3.0 milligrams per litre sodium nitrate, preferably, 2.5 milligrams per litre.

Examples

Sixteen samples or formulations of hydrogen peroxide were prepared using triple-distilled hydrogen peroxide prepared by the electrolytic process.

Each of the sixteen formulations prepared was made from 10.6 litres of 88 percent hydrogen peroxide. The same lot of hydrogen peroxide was used for all preparations; it had a specific conductance of 7.4 S/cm and a pH of −0.15. The deionized water used had a specific conductance of 0.73 μS/cm. The ten gallon formulations were made in white, polyethylene drums.

The sixteen formulations were prepared as follows:

1. A stock solution was prepared using 6.700 g $Na_2SnO_3 \cdot 3H_2O$ dissolved in 97.0 ml deionized water. The solution was heated with mixing to produce a slight opalescence at 55°C, and then cooled. One-ml portions of this stannate stock solution were used in this and other preparations below.

In this formulation, one ml of the stannate stock solution was mixed into 10.6 litres of the 88% $H_2O_2$, after which deionized water was added to produce 38.0 litres of 31% $H_2O_2$.

2. Preparation was identical to that for sample No. 1 *supra*, excepting that a different deionized water was used.

3. A solution was prepared using 0.067 g $Na_2SnO_3 \cdot 3H_2O$ dissolved in 100 ml 88% $H_2O_2$, and then mixed with 10.6 litres of 88% $H_2O_2$. This solution was then diluted with deionized water to make 38.0 litres of 31% $H_2O_2$.

4. Another solution was prepared using 0.103 g $NaNO_3$ dissolved in 138 ml of 70% $H_2O_2$ which was stabilized with commercial hydrogen peroxide containing ethylenediamine *tetra*(methylenephosphonic acid) as taught by Radimer in U.S. Patent No. 3,701,825. This solution was mixed into 10.6 litres of 88% $H_2O_2$. Deionized water (27.04 litres) was added and the material was mixed to make 38.0 litres of 31% $H_2O_2$. (One litre of the 70% $H_2O_2$ contained 110 mg NaOH, 700 Mg ethylenediamine *tetra*(methylenephosphonic acid) and 100 mg $NaNO_3$).

5. A solution containing 0.1777 g *tris*(methylenephosphonic acid) (50%) and 0.116 g $NaNO_3$ was mixed into 10.6 litres of 88% $H_2O_2$; deionized water was then added to produce 38.0 litres of 31% $H_2O_2$.

6. A solution containing 0.1529 g 1-hydroxyethylidene 1,1-diphosphonic acid (HEDP) (60%) and 0.116 g $NaNO_3$ was mixed into 10.6 litres of 88% $H_2O_2$; deionized water was then added to make 38.0 litres of 31% $H_2O_2$.

7. Tetrasodium pyrophosphate (0.1187 g) and 0.116 g $NaNO_3$ were mixed into 10.6 litres of 88% $H_2O_2$; deionized water was then added to make 38.0 litres of 31% $H_2O_2$.

8. A solution was prepared using 0.5704 g of dipicolinic acid and 0.116 g $NaNO_3$ mixed into 10.6 litres of 88% $H_2O_2$; deionized water was then added to produce 38.0 litres of 31% $H_2O_2$.

9. A stock solution was prepared using 2.500 g $Na_2SnO_3 \cdot 3H_2O$ dissolved in 66 ml deionized water. A solution of 20.000 g of 50% NaOH was added. Slowly, 5.468 g of ethylenediamine *tetra*(methylenephosphonic acid) (EDTMP) was added to the stirred solution, keeping the temperature below 50°C. The solution was diluted to 100 ml. It then had a pH of 13.65. A 0.684 ml portion of this solution was added to 57 ml of 88% $H_2O_2$ which was then added to 10.6 litres of 88% $H_2O_2$, raising its pH from −0.1 to 1.25. EDTMP (0.0561 g) was added; after mixing, the pH of the 88% $H_2O_2$ was 1.1 and 0.1024 g of 70% $HNO_3$ was added, reducing the pH to 0.20. Dilution with deionized water to 38.0 litres of 31% $H_2O_2$ and mixing gave a final pH of 3.70.

10. Two and one-half grams of $Na_2SnO_3 \cdot 3H_2O$ was dissolved in 66 ml deionized water; 20.000 g of 50% NaOH was added. Slowly, 10.000 g of 50% amino *tris*(methylenephosphonic acid) (AMP) was added to the stirred solution, keeping the temperature below 50°C. The solution was diluted to 100 ml; the pH was 13.8. A 0.684 ml aliquot of this solution was added to 57 ml of 88% $H_2O_2$. This was added to 10.6 litres of 88% $H_2O_2$, raising its pH from −0.1 to 1.18, then 0.1023 g of AMP was added; after mixing, the pH of the 88% $H_2O_2$ was 0.95. Mixing in 0.1024 g of 70% $HNO_3$ resulting in a pH of 0.26. The solution was diluted with deionized water to make 38.0 litres of 31% $H_2O_2$ with a final pH of 3.45.

11. One milliliter of the stock solution prepared for formulation No. 1 *supra* was mixed with 0.1159 g $NaNO_3$ and 0.1773 g of 50% AMP. The resulting turbid mixture was mixed into 10.6 litres of 88% $H_2O_2$. Deionized water was then added to make 38.0 litres of 31% $H_2O_2$.

12. Eighty ml of 86% $H_2O_2$ was mixed with 50 ml of deionized water and 18.75 g of $Na_2SnO_3 \cdot 3H_2O$ was added, followed by 22 ml of AMP. The mixture was stirred without heating to give a solution which was then diluted to 150 ml with deionized water, yielding a solution with a pH of 4.25. A 0.76 ml aliquot of this solution plus 0.0958 g $NaNO_3$ was mixed into 10.6 litres of 88% $H_2O_2$ which was then diluted to 38.0 litres of 31% $H_2O_2$ with deionized water.

13. To 1 ml of the stannate stock prepared for formulation No. 1 *supra* was added 0.1159 g $NaNO_3$ and 0.1533 g of 60% HEDP. The resulting clear solution was mixed into 10.6 litres of 88% $H_2O_2$. Deionized water was then added to give 38.0 litres of 31% $H_2O_2$.

14. An 80 ml aliquot of 88% $H_2O_2$ was mixed with 50 ml of deionized water and 18.75 g of $Na_2SnO_3 \cdot 3H_2O$ was added, followed by 17.38 ml of 60% HEDP. The mixture was stirred without heating to give a solution which was then diluted to 150 ml with deionized water. The solution had a pH of 4.30. A 0.76 ml aliquot of this solution plus 0.0959 g $NaNO_3$ was mixed into 10.6 litres of 88% $H_2O_2$ which was then diluted to 38.0 litres of 31% $H_2O_2$ with deionized water.

15. To 1 ml of the stannate stock prepared for formulation No. 1 *supra* was added 0.1159 g $NaNO_3$ and 0.1268 g $Na_2HPO_4$ plus 0.1225 g deionized water. The solution was mixed into 10.6 litres of 88% $H_2O_2$ which was then diluted with deionized water to make 38.0 litres of 31% $H_2O_2$. The pH of the 31% $H_2O_2$ was then adjusted with 0.1227 g of 70% $HNO_3$.

16. A 1 ml aliquot of the stock solution prepared in formulation No. 1 *supra* was mixed with 0.1159 g $NaNO_3$. The clear liquid was mixed into 10.6 litres of 88% $H_2O_2$, which was diluted with deionized water to make 38.0 litres of 31% $H_2O_2$.

The tin and phosphate contents of the samples and formulations as prepared are reported in Tables I and II; the phosphate for samples 4 to 8 is calculated, the balance are as actually determined. After storage for at least one month, the following determinations were made:

1. The ability of the hydrogen peroxide was determined on the unfiltered sample and after filtration through 8 µm filter and after a subsequent filtration through either a 5 µm or a 0.22 µm filter. The stability is reported in Table II as the percent of hydrogen peroxide remaining after 24 hours at 100°C. Duplicate samples were run and the higher stability was recorded.

2. The stability of the hydrogen peroxide formulations was determined as above after the addition of contaminants. The contaminant concentrations used for the unfiltered and 8 µm filtered samples was 12 µg/l Al, 12 µg/l Fe, 2.4 µg/l Cu, 1.2 µg/l Mn, and 0.6 µg/l Cr. For the 5µm filtered samples, the contaminant levels are reduced to one-tenth the above; for the 0.22 µm filtered samples, the contaminant levels were reduced to one-thousandth of the 8 µm filter samples. The results are reported in Table IV.

3. The tin concentration was determined on the samples before filtration and after filtration as above and are reported in Table I as µg/l Sn.

4. The phosphorus content was determined on the samples before filtration and after filtration as above. The results are reported in Table II as µg $PO_4$/l.

As can be seen from Tables III and IV, the organic phosphonic acid formulations were relatively ineffective as stabilizers at these concentrations, confirming the teachings of the prior art. The tin stabilized samples 1, 2, and 3 are erratically stable, the stability sometimes increasing with decreasing filter size, which reduced the tin and phosphorus assay. The reason for this may be that the filtration removed any decomposition catalyst with the tin floc leaving the remaining solution purer and, therefore, more stable.

As the stabilities of the samples were run in duplicate and samples 1 and 2 were erratic, the replicate determinations are presented as follows:

4

**0 097 305**

Sample 1 (not contaminated) unfiltered—99.4, 99.0; 8 µm filter—98.9, 98.4; 5 µm filter—96.3, 94.9; 0.22 µm filter—77.8, 93.5.

Sample 1 (contaminated) unfiltered—72.8, 74.0; 8 µm filter 79.9, 79.2; 5 µm filter—88.9, 89.5; 0.22 µm filter—77.8, 93.5.

Sample 2 (not contaminated) unfiltered—99.1, 99.2; 8 µm filter—99.0, 99.0; 5 µm filter—96.5, 96.8; 0.22 µm filter—91.5, 97.0.

Sample 2 (contaminated) unfiltered—67.7, 35.3; 8 µm filter—82.4, 81.1; 5 µm filter—93.2, 88.0; 0.22 µm filter—71.9, 79.1.

TABLE I

Effect of filtration on tin content

| | | (mg/l Sn) Filter | | | |
| --- | --- | --- | --- | --- | --- |
| Sample | Initial | None | 8 µm | 5 µm | 0.22 µm |
| 1 | 0.8 | 0.6 | 0.5 | 0.0 | 0.0 |
| 2 | 0.8 | 0.6 | 0.4 | 0.0 | 0.0 |
| 3 | 0.8 | 0.6 | 0.0 | 0.0 | 0.0 |
| 4 | 0.0 | 0.0 | 0.0 | 0.0 | 0.0 |
| 5 | 0.0 | 0.0 | 0.0 | 0.0 | 0.0 |
| 6 | 0.0 | 0.0 | 0.0 | 0.0 | 0.0 |
| 7 | 0.0 | 0.0 | 0.0 | 0.0 | 0.0 |
| 8 | 0.0 | 0.0 | 0.0 | 0.0 | 0.0 |
| 9 | 0.2 | 0.2 | 0.2 | 0.2 | 0.2 |
| 10 | 0.2 | 0.1 | 0.1 | 0.1 | 0.1 |
| 11 | 0.8 | 0.8 | 0.8 | 0.8 | 0.6 |
| 12 | 1.1 | 1.1 | 1.1 | 1.1 | 1.1 |
| 13 | 0.9 | 1.0 | 1.0 | 0.9 | 0.9 |
| 14 | 1.1 | 1.2 | 1.2 | 1.2 | 1.2 |
| 15 | 0.8 | 0.8 | 0.9 | 0.8 | 0.8 |
| 16 | 0.8 | 0.7 | 0.4 | 0.1 | 0.0 |

5

TABLE II
Effect of filtration on phosphate

| Sample | Initial | (mg/l PO$_4$) Filter | | | |
|---|---|---|---|---|---|
| | | None | 8 µm | 5 µm | 0.22 µm |
| 1 | 0.0 | 0.0 | 0.0 | 0.0 | 0.0 |
| 2 | 0.0 | 0.0 | 0.0 | 0.0 | 0.0 |
| 3 | 0.0 | 0.0 | 0.0 | 0.0 | 0.0 |
| 4 | 2.2 | 1.9 | 2.0 | 2.0 | 2.0 |
| 5 | 2.2 | 2.0 | 2.0 | 1.9 | 1.8 |
| 6 | 2.2 | 2.1 | 2.0 | 2.0 | 2.0 |
| 7 | 2.2 | 2.1 | 2.1 | 1.9 | 1.8 |
| 8 | 0.0 | 0.0 | 0.0 | 0.0 | 0.0 |
| 9 | 2.1 | 1.8 | 1.8 | 1.8 | 1.8 |
| 10 | 2.1 | 1.8 | 2.0 | 1.9 | 1.8 |
| 11 | 2.2 | 2.0 | 2.0 | 2.1 | 2.1 |
| 12 | 1.8 | 1.7 | 1.8 | 1.7 | 1.8 |
| 13 | 2.2 | 2.2 | 2.2 | 2.1 | 2.2 |
| 14 | 1.8 | 1.7 | 1.6 | 1.6 | 1.5 |
| 15 | 2.2 | 2.1 | 2.1 | 2.1 | 2.1 |
| 16 | 0.0 | 0.0 | 0.0 | 0.0 | 0.0 |

TABLE III

Effect of filtration on hydrogen peroxide stability

(No impurities)
24 hour stability, % H₂O₂ retained
Filter

| Sample | Age days | None | 8 μm | 5 μm | 0.22 μm |
|--------|----------|------|------|------|---------|
| 1 | 38 | 99.4 | 98.9 | 96.3 | 84.5 |
| 2 | 38 | 99.2 | 99.0 | 96.8 | 97.0 |
| 3 | 43 | 99.1 | 99.9 | 96.3 | 75.6 |
| 4 | 49 | 43.9 | 98.0 | 85.0 | 62.7 |
| 5 | 49 | 99.8 | 99.2 | 95.6 | 86.5 |
| 6 | 49 | 83.8 | 84.5 | 80.6 | 83.3 |
| 7 | 51 | 80.1 | 63.6 | 59.6 | 51.0 |
| 8 | 51 | 73.9 | 99.4 | 82.2 | 48.5 |
| 9 | 49 | 98.9 | 99.4 | 99.2 | 98.3 |
| 10 | 54 | 99.4 | 99.0 | 97.9 | 94.1 |
| 11 | 55 | 99.6 | 99.6 | 99.7 | 99.1 |
| 12 | 56 | 99.6 | 99.7 | 99.7 | 99.6 |
| 13 | 62 | 99.3 | 99.2 | 98.8 | 98.7 |
| 14 | 61 | 99.2 | 99.4 | 99.0 | 99.2 |
| 15 | 66 | 99.4 | 99.3 | 99.3 | 93.8 |
| 16 | 66 | 99.3 | 99.3 | 99.1 | 87.7 |

**0 097 305**

TABLE IV
Effect of filtration on stability of hydrogen
Peroxide containing impurities

24 Hour stability, % $H_2O_2$ retained
Filter

| Sample | Age days | None | 8 μm | 5 μm | 0.22 μm |
|---|---|---|---|---|---|
| 1 | 38 | 74.0 | 79.9 | 89.5 | 93.5 |
| 2 | 38 | 67.7 | 82.4 | 93.2 | 79.7 |
| 3 | 43 | 76.4 | 74.9 | 92.5 | 56.2 |
| 4 | 49 | 0.0 | 1.7 | 46.3 | 1.8 |
| 5 | 49 | 13.7 | 2.9 | 65.7 | 80.3 |
| 6 | 49 | 3.9 | 6.8 | 61.1 | 60.0 |
| 7 | 51 | 14.0 | 11.8 | 34.9 | 35.6 |
| 8 | 51 | 41.2 | 36.7 | 48.5 | 58.5 |
| 9 | 49 | 36.2 | 49.3 | 96.2 | 97.1 |
| 10 | 54 | 40.8 | 51.3 | 88.3 | 93.6 |
| 11 | 55 | 94.0 | 96.1 | 98.3 | 98.4 |
| 12 | 56 | 98.7 | 98.7 | 99.8 | 99.6 |
| 13 | 62 | 90.3 | 83.3 | 97.5 | 97.8 |
| 14 | 61 | 96.6 | 96.4 | 98.2 | 99.0 |
| 15 | 66 | 86.3 | 88.4 | 98.6 | 99.2 |
| 16 | 66 | 83.5 | 85.9 | 96.9 | 82.8 |

**Claims**

1. An aqueous hydrogen peroxide solution with a maximum residue after evaporation of 20 milligrams per litre stabilized against decomposition by contaminants, characterized in that said aqueous solution contains 25 percent to 35 percent hydrogen peroxide by weight, 0.2 to 3.0 milligrams per litre of sodium stannate trihydrate and 0.1 to 2.5 milligrams per litre of organic phosphonic acid.

2. The composition of claim 1 characterized in that the organic phosphonic acid is amino *tris*-(methylenephosphonic acid).

3. The composition of claim 1 characterized in that the organic phosphonic acid is 1-hydroxyethylidene-1,1-diphosphonic acid.

4. The composition of claim 1 characterized in that the organic phosphonic acid is ethylenediamine *tetra*(methylenephosphonic acid).

5. The composition of claim 1, 2, 3, or 4 characterized in that the solution also contains 0.2 to 3.0 milligrams per litre of sodium nitrate.

6. A method for preparing a 25 percent to 35 percent aqueous solution of hydrogen peroxide by weight with a maximum residue after evaporation of 20 milligrams per litre and stable against decomposition by contaminants characterized by adding sufficient alkali metal stannate and organic phosphonic acid to a solution of pure hydrogen peroxide to provide the equivalent of 0.2 to 3.0 milligrams per litre of sodium stannate trihydrate and 0.1 to 2.5 milligrams per litre of organic phosphonic acid.

7. The method of claim 6 characterized in that the organic phosphonic acid is amino *tris*(methylenephosphonic acid).

8. The method of claim 6 characterized in that the organic phosphonic acid is 1-hydroxyethylidene-1,1-diphosphonic acid.

8

**0 097 305**

9. The method of claim 6 characterized in that the organic phosphonic acid is ethylenediamine *tetra*(methylenephosphonic acid).

10. The method of claims 6, 7, 8, or 9 characterized in that sufficient sodium nitrate is added equivalent to 0.02 to 3.0 milligrams per litre after dilution.

**Patentansprüche**

1. Wäßrige Wasserstoffperoxidlösung mit einem maximalen Rückstand nach dem Verdampfen von 20 mg pro Liter, stabilisiert gegen Zersetzung durch Verunreinigungen, dadurch gekennzeichnet, daß die wäßrige Lösung 25 bis 36 Gew.-% Wasserstoffperoxid, 0,2 bis 3,0 mg pro Liter Natriumstannat-trihydrat und 0,1 bis 2,5 mg pro Liter organische Phosphonsäure enthält.

2. Zusammensetzung nach Anspruch 1, dadurch gekennzeichnet, daß die organische Phosphonsäure Aminotris(methylenphosphonsäure) ist.

3. Zusammensetzung nach Anspruch 1, dadurch gekennzeichnet, daß die organische Phosphonsäure 1-Hydroxyethyliden-1,1-diphosphonsäure ist.

4. Zusammensetzung nach Anspruch 1, dadurch gekennzeichnet, daß die organische Phosphonsäure Ethylendiamintetra(methylenphosphonsäure) ist.

5. Zusammensetzung nach Anspruch 1, 2, 3 oder 4, dadurch gekennzeichnet, daß die Lösung außerdem 0,2 bis 3,0 mg pro Liter Natriumnitrat enthält.

6. Verfahren zur Herstellung einer 25 bis 35 gew.-%igen wäßrigen Lösung von Wasserstoffperoxid mit einem maximalen Rückstand nach dem Verdampfen von 20 mg pro Liter, die stabil gegen Zersetzung durch Verunreinigungen ist, dadurch gekennzeichnet, daß man ausreichend Alkalimetallstannat und organische Phosphonsäure zu einer Lösung von reinem Wasserstoffperoxid gibt, um das Äquivalent von 0,2 bis 3,0 mg pro Liter Natriumstannat-trihydrat und 0,1 bis 2,5 mg pro Liter organischer Phosphonsäure bereitzustellen.

7. Verfahren nach Anspruch 6, dadurch gekennzeichnet, daß die organische Phosphonsäure Aminotris(methylenphosphonsäure) ist.

8. Verfahren nach Anspruch 6, dadurch gekennzeichnet, daß die organische Phosphonsäure 1-Hydroxyethyliden-1,1-diphosphonsäure ist.

9. Verfahren nach Anspruch 6, dadurch gekennzeichnet, daß die organische Phosphonsäure Ethylendiamintetra(methylenphosphonsäure) ist.

10. Verfahren nach Anspruch 6, 7, 8 oder 9, dadurch gekennzeichnet, daß eine ausreichende Menge Natriumnitrat zugegeben wird, die äquivalent ist, 0,02 bis 3,0 mg pro Liter nach dem Verdünnen.

**Revendications**

1. Solution aqueuse de peroxyde d'hydrogène avec un résidu maximum après évaporation de 20 milligrammes par litre, stabilisée contre la décomposition par des contaminants, caractérisée en ce que cette solution aqueuse contient 25% à 35% en poids de peroxyde d'hydrogène, 0,2 à 3,0 milligrammes par litre de stannate de sodium trihydraté et 0,1 à 2,5 milligrammes par litre d'acide phosphonique organique.

2. Composition de la revendication 1, caractérisée en ce que l'acide phosphonique organique est de l'acide amino *tris*(méthylènephosphonique).

3. Composition de la revendication 1, caractérisée en ce que l'acide phosphonique organique est l'acide 1-hydroxyéthylidène-1,1-diphosphonique.

4. Composition de la revendication 1, caractérisée en ce que l'acide phosphonique organique est l'acide éthylènediamine *tétra* (méthylènephosphonique).

5. Composition suivant les revendications 1, 2, 3 ou 4, caractérisée en ce que la solution contient aussi 0,2 à 3,0 milligrammes par litre de nitrate de sodium.

6. Procédé pour préparer une solution aqueuse à 25 à 35% en poids de peroxyde d'hydrogène avec un résidu maximum après évaporation de 20 milligrammes par litre et stable contre la décomposition par des contaminants, caractérisé en ce qu'on ajoute suffisamment de stannate de métal alcalin et d'acide phosphonique organique à une solution de peroxyde d'hydrogène pur pour donner l'équivalent de 0,2 à 3,0 milligrammes par litre de stannate de sodium trihydraté et de 0,1 à 2,5 milligrammes par litre d'acide phosphonique organique.

7. Procédé de la revendication 6, caractérisé en ce que l'acide phosphonique organique est l'acide amino *tris*(méthylènephosphonique).

8. Procédé de la revendication 6, caractérisé en ce que l'acide phosphonique organique est l'acide 1-hydroxyéthylidène-1,1-di-phosphonique.

9. Procédé de la revendication 6, caractérisé en ce que l'acide phosphonique organique est l'acide éthylènediamine tétra(méthylènephosphonique).

10. Procédé des revendications 6, 7, 8 ou 9 caractérisé en ce qu'on ajoute suffisamment de nitrate de sodium, équivalent à 0,02 à 3,0 milligrammes par litre après dilution.

9